# EUROPÄISCHE PATENTANMELDUNG

(11) **EP 0 578 277 A1**
(43) Veröffentlichungstag der Anmeldung: **12.01.1994**
(21) Anmeldenummer: 93113091.8
(22) Anmeldetag: 26.05.1990
(51) Int. Cl.: B65D 65/46, A23G 3/00, A23P 1/08

(54) **Verpackung für Lebensmittel-Produkte**

(30) Priorität: 30.06.1989 DE 3921584
(62) Teilanmeldung aus: 90110014.9
(71) Anmelder: Schmitz-Scholl, Wilh., D-45478 Mülheim/Ruhr (DE)
(72) Erfinder: Thörner, Hans-Heinz, D-46047 Oberhausen (DE); Kühn, Rolf, D-46049 Oberhausen (DE)
(74) Vertreter: Andrejewski, Walter, Dr.

(57) **Zusammenfassung**

Verpackung für Lebensmittel-Produkte mit einem Verpackungsaußenteil und einem Verpackungsinnenteil. Das Verpackungsinnenteil besitzt zumindest eine Ausformung für die Aufnahme des Produktes. Es besteht, zumindest soweit es mit dem Produkt in Kontakt kommt, aus einem Lebensmittel.

## Beschreibung

Die Erfindung betrifft eine Verpackung für Lebensmittel-Produkte mit einem Verpackungsaußenteil und einem Verpackungsinnenteil, welches zumindest eine Ausformung für die Aufnahme des Produktes aufweist. Das Verpackungsaußenteil kann beispielsweise in Form einer Schachtel, einer Kiste od. dgl. aufgebaut sein. Es kann sich aber auch um eine Folie, z.B. eine umhüllende oder abdeckende Folie handeln. Die Erfindung bezieht sich insbesondere auf solche Verpackungen, die im Lebensmittel-Einzelhandel eingesetzt werden.

Bei der (aus der Praxis) bekannten Verpackung, von der die Erfindung ausgeht, besteht das Verpackungsaußenteil zumeist aus Pappe, Karton in Form von Feinpappe, Steifpapier, Kunststoffolie, Metallfolie od. dgl.. Das Verpackungsinnenteil besteht aus Kunststoff. Insbesondere sind Verpackungsinnenteile aus einer ausreichend steifen Kunststoffolie bekannt, die mehrere durch Tiefziehen hergestellte Ausformungen aufweist. In dieser Form werden die Verpackungen, von denen die Erfindung ausgeht, insbesondere für Pralinen, Gebäck oder ähnliche Süßwaren eingesetzt. Ein solches Verpackungsinnenteil stellt bei üblicher Entsorgung eine Umweltbelastung dar, weil es nur schwer verrottet und beim Verbrennen umweltbelastende Verbrennungsprodukte entwickelt. Im übrigen kann nicht ausgeschlossen werden, daß Lebensmittel-Produkte, die mit einem solchen Verpackungsinnenteil in Kontakt kommen, kontaminieren, weil Verpackungsbestandteile, z.B. Weichmacher od. dgl., in das Lebensmittel-Produkt hineindiffundieren.

Der Erfindung liegt die Aufgabe zugrunde, eine Verpackung des eingangs beschriebenen Aufbaus so weiter auszubilden, daß die Gefahr der Umweltbelastung oder Produktkontamination durch das Verpackungsinnenteil nicht mehr besteht.

Zur Lösung dieser Aufgabe lehrt die Erfindung, daß das Verpackungsinnenteil, zumindest soweit es mit dem Lebensmittel-Produkt in Berührung kommt, aus einem Lebensmittel geformt ist. Im Rahmen der Erfindung kann das Verpackungsinnenteil als Backgut, Trockengut oder Preßgut geformt sein. Dabei kann das Backgut aus Mehl mit Zutaten, beispielsweise oblatenähnlich, aus Eiweiß mit Zutaten, beispielsweise in Form von Preßfleisch, Zuckerschaum mit Zutaten u. dgl. bestehen. Das Verpackungsinnenteil kann aber auch als Kristallkonglomerat geformt sein. Auch kann es aus einem Faservlies bestehen. Im Rahmen der Erfindung liegt es, es dekorativ zu gestalten.

Arbeitet man mit einer erfindungsgemäßen Verpackung, so kann das Verpackungsinnenteil so eingerichtet werden, daß es ebenfalls verzehrbar ist. Jedenfalls ist das Verpackungsinnenteil problemlos zu entsorgen und es können kontaminierende Bestandteile in das Lebensmittel-Produkt nicht mehr hineindiffundieren.

Im folgenden wird die Erfindung anhand einer lediglich ein Ausführungsbeispiel darstellenden Zeichnung ausführlicher erläutert. Es zeigen in schematischer Darstellung
- Fig. 1: das Verpackungsinnenteil einer erfindungsgemäßen Verpackung,
- Fig. 2: in gegenüber der Fig. 1 wesentlich vergrößertem Maßstab einen Schnitt in Richtung A-A durch den Gegenstand nach Fig. 1.

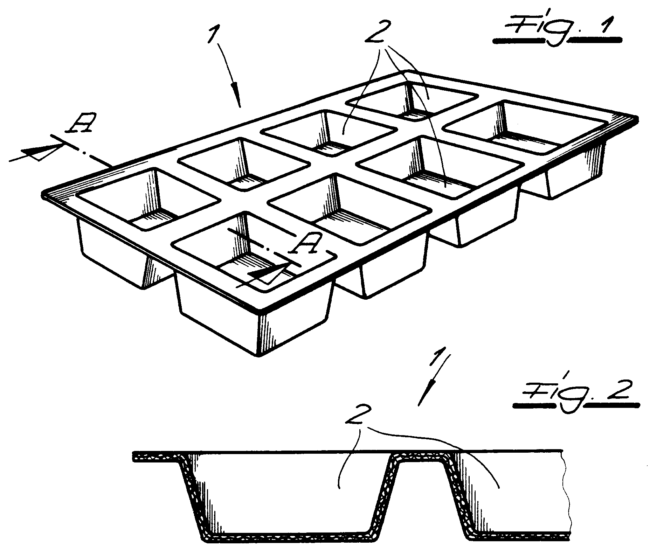

In den Figuren ist ein Verpackungsinnenteil 1 dargestellt, welches für eine Verpackung für Lebensmittel-Produkte bestimmt ist, die aus einem Verpackungsinnenteil und außerdem einem Verpackungsaußenteil besteht. Bei dem Verpackungsaußenteil kann es sich um eine Schachtel, eine Kiste, eine Schlauchpackung od. dgl. handeln, die aus Pappe, Feinpappe oder Steifpapier, Folie od. dgl. aufgebaut ist. Das Verpackungsinnenteil 1 besitzt eine Mehrzahl von Ausformungen 2 für die Aufnahme des Produktes. Im Ausführungsbeispiel mag es sich um Pralinen handeln. Das Verpackungsinnenteil 1 ist, zumindest soweit es mit dem Produkt in Kontakt kommt, aus einem Lebensmittel geformt. Die Fig. 2 macht deutlich, daß das Verpackungsinnenteil 1 als Backgut geformt ist. Es könnte aber auch, wie beschrieben, anders aufgebaut oder geformt sein.

## Patentansprüche

1. Verpackung für Lebensmittel-Produkte mit einem Verpackungsaußenteil und einem Verpackungsinnenteil, welches zumindest eine Ausformung für die Aufnahme des Produktes aufweist, **dadurch gekennzeichnet**, daß das Verpackungsinnenteil, zumindest soweit es mit dem Produkt in Kontakt kommt, aus einem Lebensmittel geformt ist.

2. Verpackung nach Anspruch 1, dadurch gekennzeichnet, daß das Verpackungsinnenteil als Backgut, Trockengut oder Preßgut geformt ist.

3. Verpackung nach einem der Ansprüche 1 oder 2, dadurch gekennzeichnet, daß das Verpackungsinnenteil als Kristallkonglomerat geformt ist.

4. Verpackung nach einem der Ansprüche 1 oder 2, dadurch gekennzeichnet, daß das Verpackungsinnenteil als Faservlies aus Lebensmittelfasern aufgebaut ist.
